# EUROPEAN PATENT SPECIFICATION

(11) **EP 0 781 509 B1**
(45) Date of publication and mention of the grant of the patent: **24.10.2001**
(21) Application number: 96203582.0
(22) Date of filing: 18.12.1996
(51) Int. Cl.: A22C 11/10

(54) **A machine for the subdivision of a continuous sausage into sausages with a twisted sheath**
Maschine zum Unterteilen einer kontinuierlichen Wurst in Würste mit verdrillter Hülle
Machine pour diviser une saucisse continue en saucisses à peau torsadée

(30) Priority: 27.12.1995 IT MI952761
(43) Date of publication of application: 02.07.1997
(73) Proprietor: REFIN S.r.l., I-36100 Vicenza (IT)
(72) Inventor: Righele, Giovanni Battista, 36010 Zane' (Vicenza) (IT)
(74) Representative: Mittler, Enrico

(56) References cited:
- EP-A- 0 503 720
- WO-A-94/23584
- DE-B- 1 018 744
- GB-A- 246 522
- US-A- 1 384 050
- US-A- 1 701 713
- US-A- 1 866 497
- US-A- 1 906 372
- US-A- 1 966 552

## Description

The present invention relates to a machine for the subdivision of a continuous sausage into sausages with a twisted sheath.

Machines are already known that, starting from a single sausage consisting of a continuous sheath full of meat for sausages, proceed to subdivide it into sausages connected together or separated one from the other.

In particular, in EP-A-0503720 a machine is described for the subdivision of a continuous sausage into separate sausages, that comprises a rotating drum endowed with a circumferential succession of squeezing members and of shearing members arranged along generators of the drum, wherein the squeezing members consist of pairs of pincers urged in relative translation between an open position and a closed position and the shearing members consist of sliding knives normally housed in corresponding cavities of one of said pincers and operated to exit from it for the shearing of the sausage when said pincers are in the closed position.

In this way the formation is made possible of short appendices joining the sausages, that at the instant when the shearing knife is operated are kept properly tight and straight between the co-operating pincers, so as to ensure a perfect shear into sausages that are separate one from the other.

It has on the other hand been seen that with the subsequent manipulation required for their packing the sausages thus formed tend to split open and thus to lose some of the product.

WO 94/23584 discloses an apparatus for forming sausage links according to the preamble of claim 1.

The object of the present invention is thus that of providing a machine that allows a continuous sausage to be subdivided into sausages that are properly closed at the ends, that, even if they are separate one from the other, remain exempt from losses of product.

According to the invention a machine has therefore been made as defined in claim 1.

In this way the sausages thus formed are properly closed at the ends and even in the case of their complete separation by the shearing of their joining appendices all product losses during the subsequent manipulation are avoided.

Naturally, the complete separation of the sausages makes it necessary to use shearing members capable of acting on the joining appendices of the sausages. The shear can be performed at each appendix or every two or more appendices so as to separate the sausages one by one or by twos and so on.

According to a preferred embodiment the pairs of twisting rollers are driven by respective toothed racks, that also engage with the sheaths of the sausages and that are made to move alternatively in opposite directions along respective generators of the drum between successive squeezing members.

Again preferably, both the pincers of the squeezing members and the twisting rollers are driven by cam-type means, that extend helically along a fixed cylinder with axis parallel to that of the rotating drum and with which there co-operate cam-type feelers integral with said pincers and with said toothed racks.

The shearing members, if any, are in turn driven by further cam-type means consisting of a shaped edge arranged in a preset position along the path of rotation of the drum.

The features of the present invention will be made more evident by the following detailed description of an embodiment thereof destined to obtaining sausages separated one from the other, that is illustrated only as a non-limiting example in the enclosed drawings, wherein:
Fig. 1 shows a machine according to the invention sectioned along a vertical plane perpendicular to the axis of rotation of the drum;
Fig. 2 shows the same machine sectioned along a diametrical plane passing through the line II-II of Fig. 1;
Figs. 3-7 are sectional views similar to that of Fig. 2, that show on an enlarged scale the position of the squeezing and of the shearing members in various successive angular positions of the drum;
Figs. 8 and 9 are further sectional views similar to that of Fig. 2, that show on an enlarged scale the position of the twisting rollers in two different angular positions of the drum;
Fig. 10 illustrates an axial view of a group of cams that drive the squeezing and the shearing members and the twisting rollers.

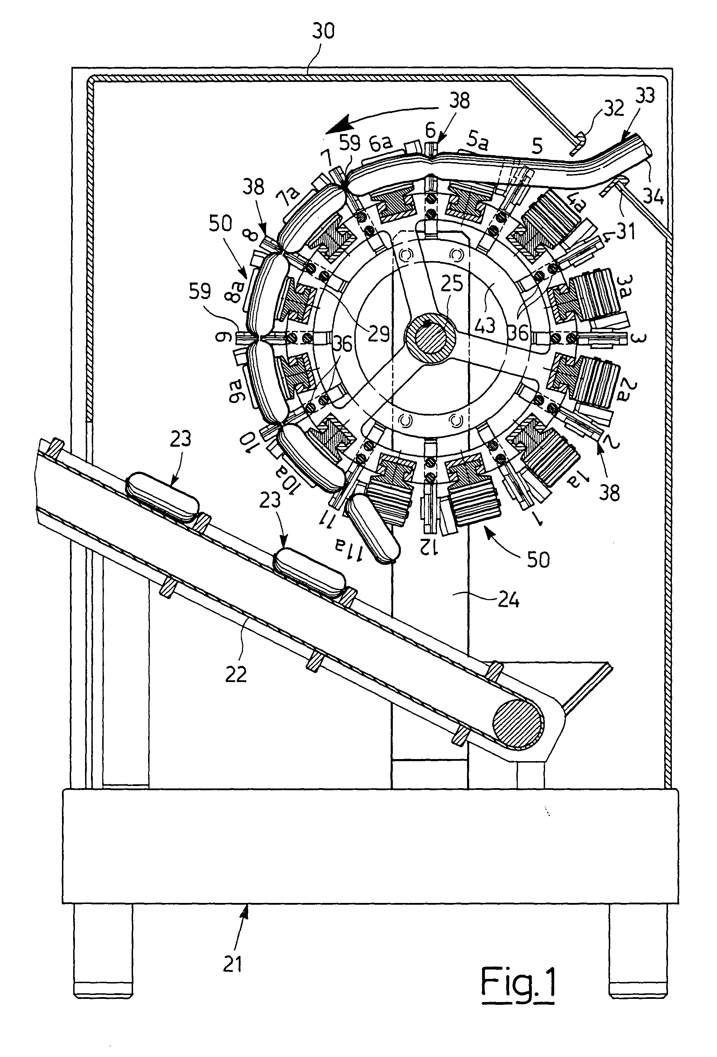

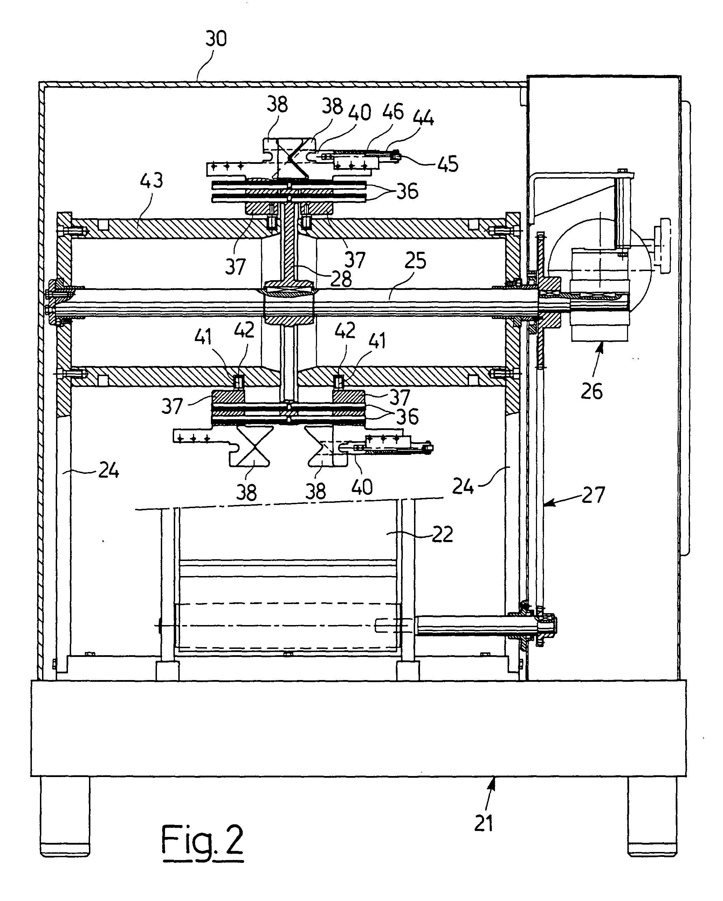

With reference to Figs. 1 and 2, the machine illustrated in the drawings comprises a chassis 21 on which there are positioned a conveyor belt 22 for individual sausages 23 and a pair of sides 24 for supporting a rotating shaft 25 driven by a motor 26. A chain or belt transmission 27 transmits the motion from the shaft 25 to the conveyor belt 22.

On the shaft 25 there is keyed through a spider 28 a drum 29, that is wholly enclosed inside a protection case 30 endowed with a lateral hole 31 with a covering bush 32 for the entry of a continuous sausage 33 consisting of a continuous sheath 34 filled with product 35 for sausages. The case 30 is also open on the opposite side for the passage of the conveyor belt 22.

The drum 29 is endowed with pairs of holes one above the other, that are distributed along circumferentially distanced generators of its lateral surface and in each of which there is inserted and fastened a pair of guiding bars 36 for sliding supports 37 of a pair of translatable pincers 38, that constitute the squeezing members of the continuous sausage 33. Inside one pincer 38 of each pair there is housed a shearing member of the sausage, consisting of a sliding knife 40.

As shown in Figs. 2-7 and 10, from the supports 37 of the pincers 38 there protrude respective feeler pins 41 slidingly housed in respective helical slots 42 obtained in the external wall of a fixed cylindrical casing 43 with longitudinal axis coincident with the axis of rotation of the drum 29, arranged and fastened between the two supporting sides 24 of the machine.

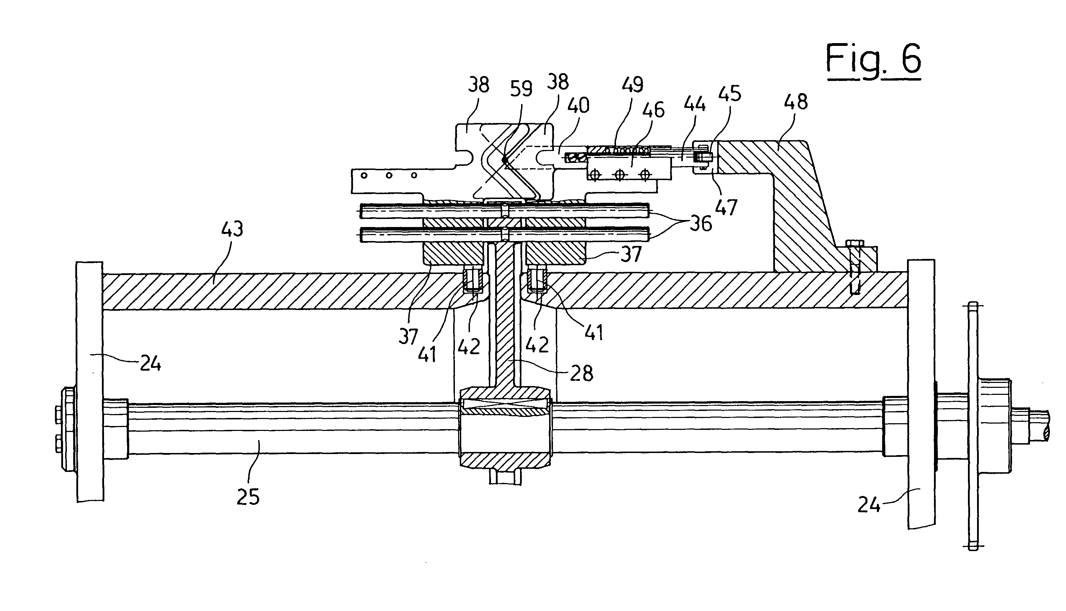

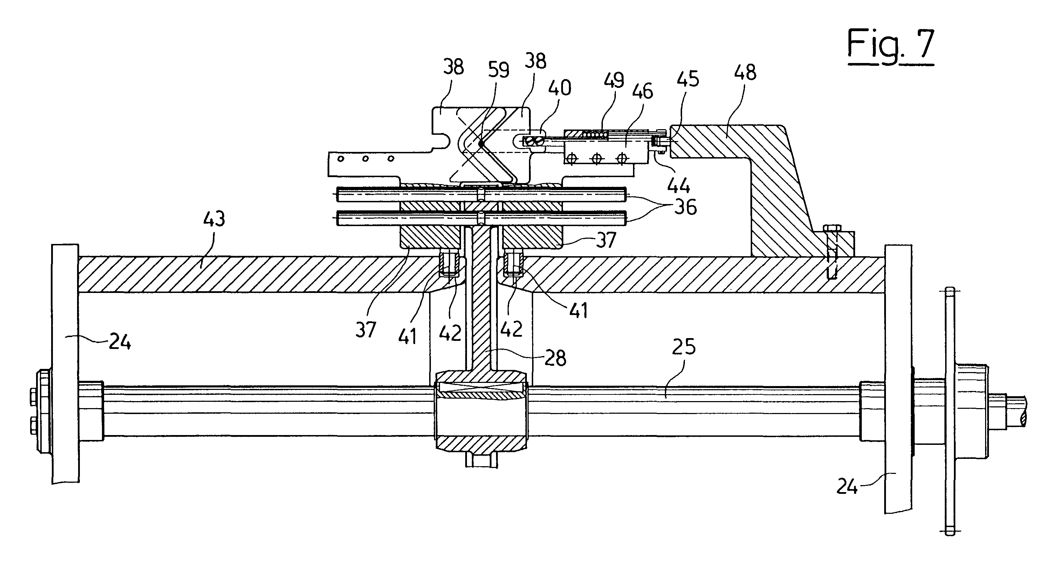

From the knife 40, on the other hand, there extends toward the rear an axial tang 44 with a terminal roller 45, that is slidably held by a support 46 and is capable of engaging itself with an inclined wall 47 of a rear shoulder 48 (Figs. 6, 7 and 10) fastened to the cylindrical case 43 in a predetermined part of the rotational path of the drum 29. A spring 49 urges the knife 40 in the rearward at rest position of Fig. 7.

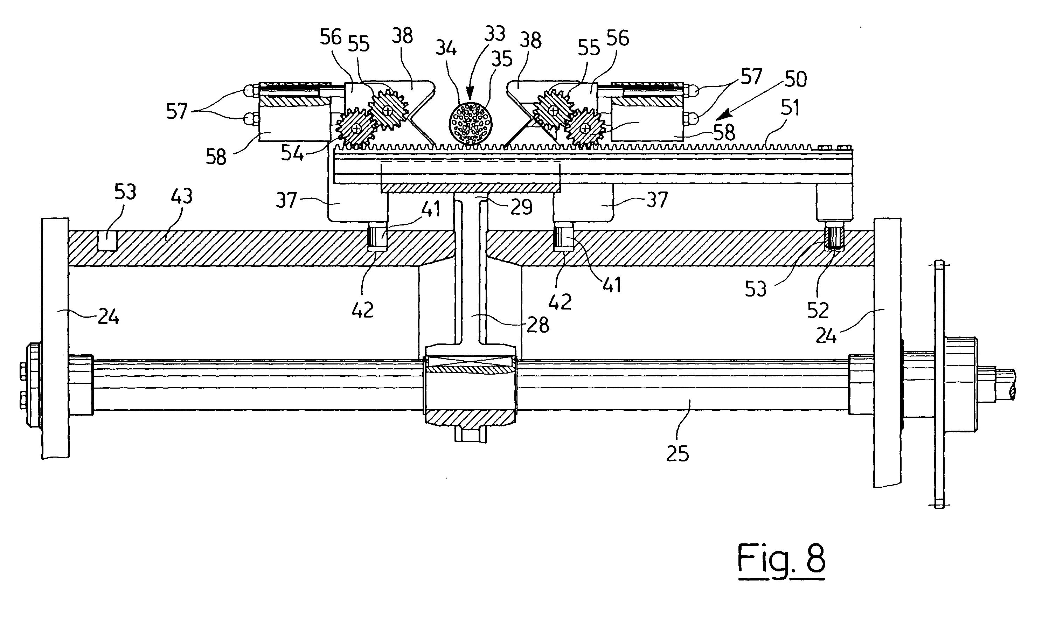

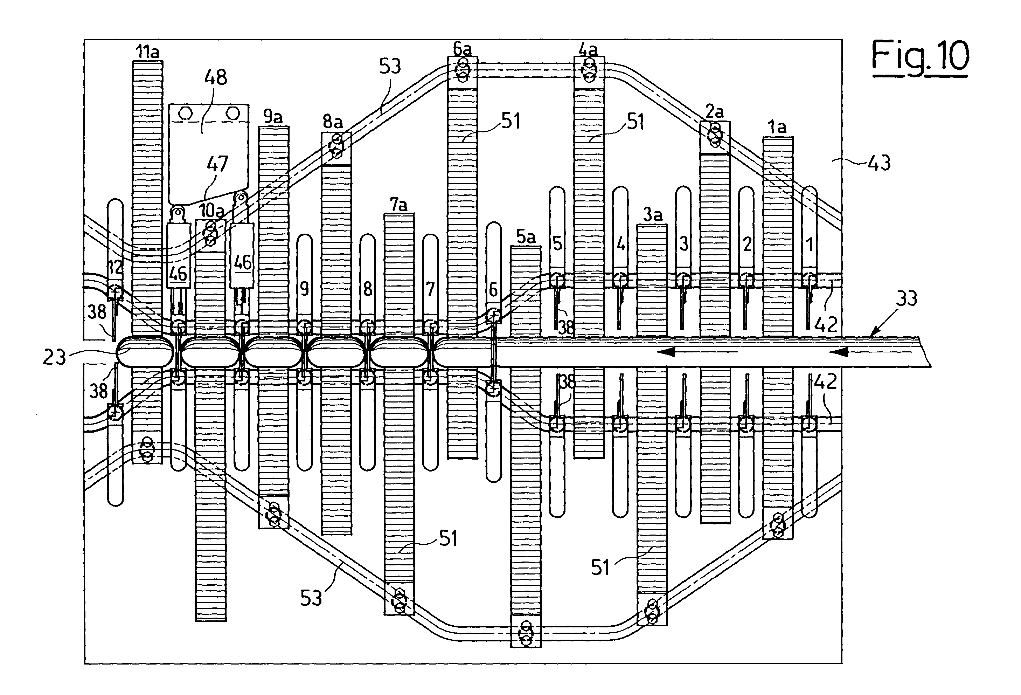

Between one and the other of the squeezing and shearing members just described there is arranged a twisting unit 50 that comprises a toothed rack 51 (Figs. 8-10) held slidably by the drum 29, alternatively on one side and on the other of the drum itself (Fig. 10), and endowed with a feeler pin 52 slidably housed in a second respective helical groove 53 obtained in the external wall of the fixed cylindrical case 43. With the toothed rack 51 there are engaged two toothed wheels 54, that in turn mesh with respective toothed twisting rollers 55 suitable for engaging with the sheath 34 of the sausage to cause a torsion of the sheath iself between one squeezing point and the next. The twisting rollers 55 and the toothed wheels 54 are rotatably held by a pair of movable supports 56, that are in turn slidably held and elastically urged thanks to sliding pins 57 and springs not shown by supporting blocks 58 integral with the supports 37 of the pincers 38.

Due to the effect of the structure just described and of the conformation of the helical grooves 42 and 53 (Fig. 10), the machine illustrated in the drawings is destined to operate as follows.

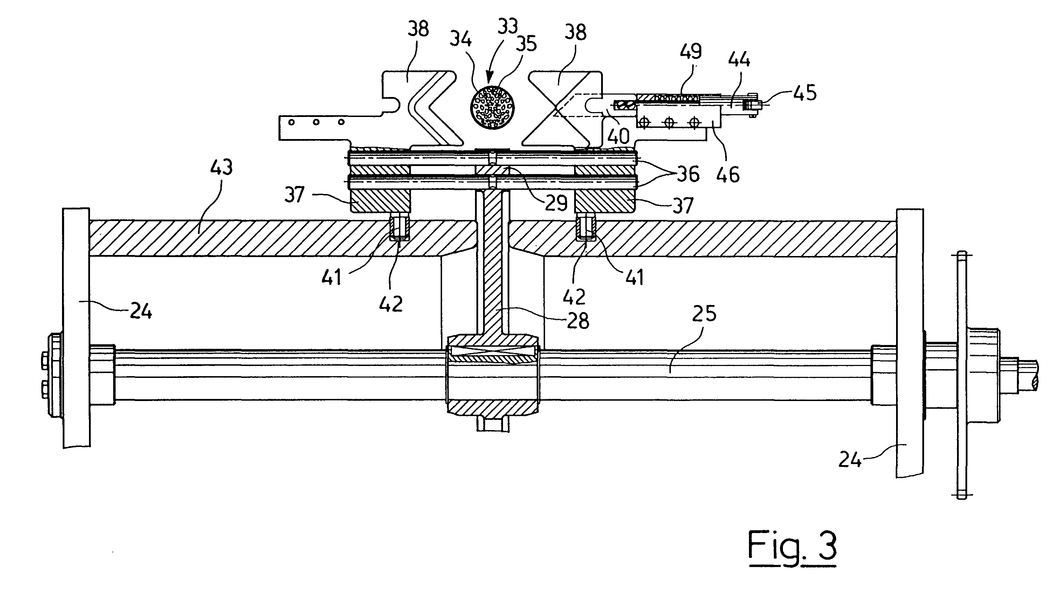

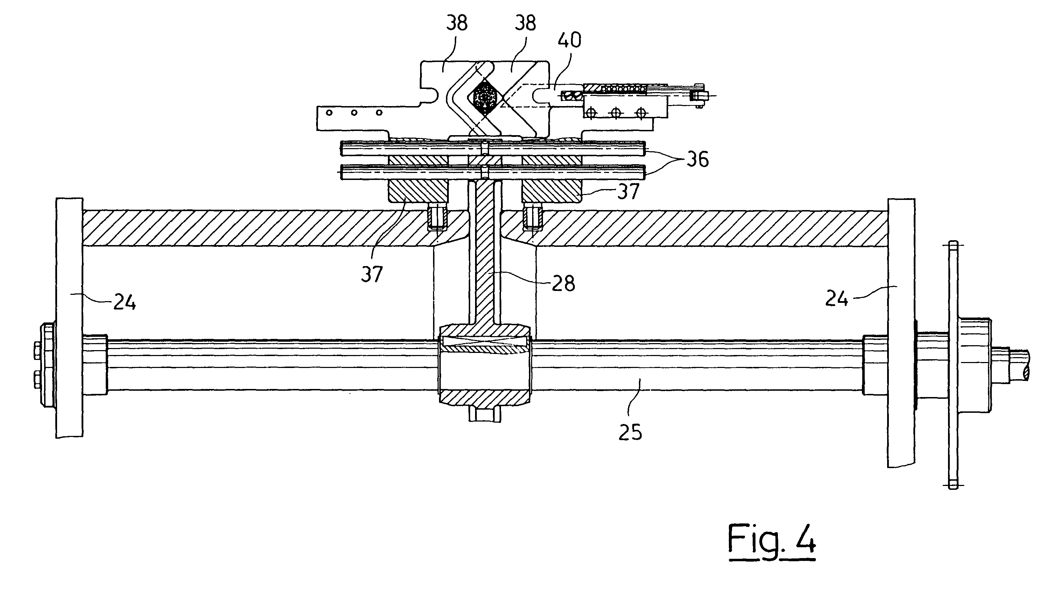

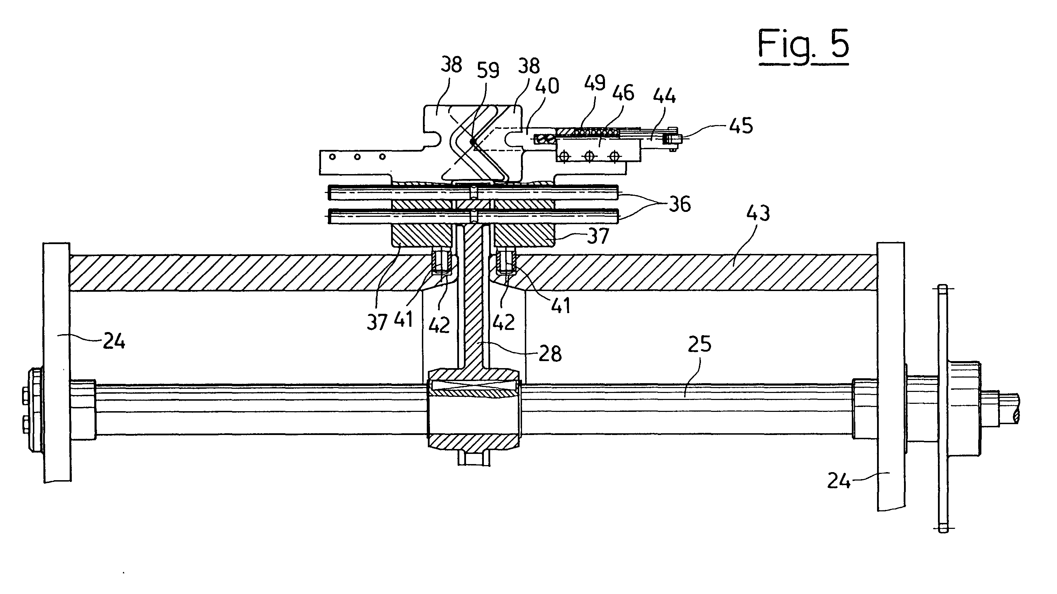

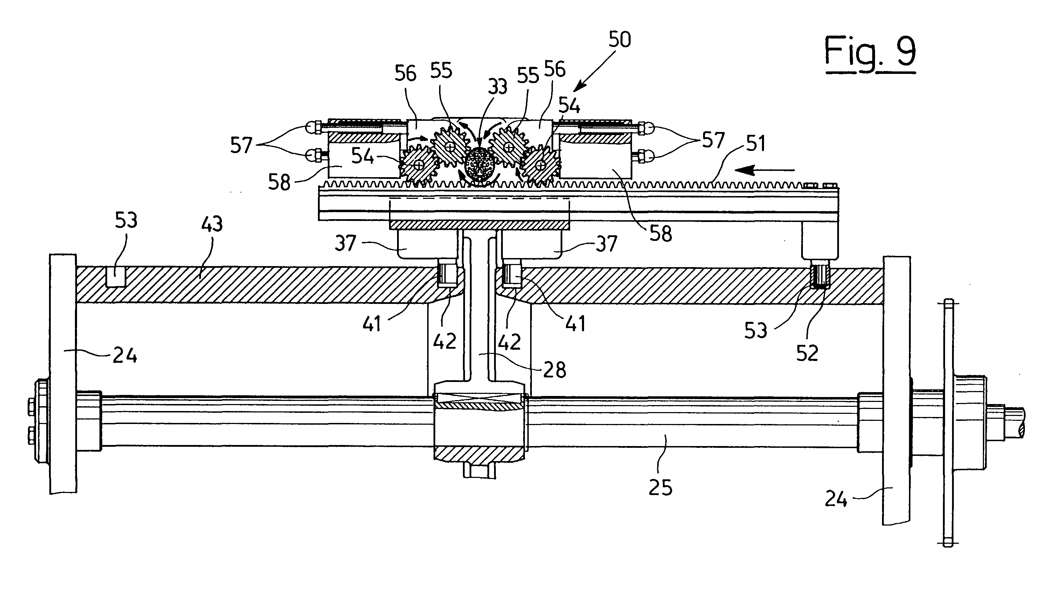

Due to the effect of the rotation of the drum 29 and of the cam-type action of the helical grooves 42, each pair of pincers 38 passes cyclically from the open position represented in Fig. 3 and indicated with the numbers 1, 2, 3, 4 and 5 in Fig. 1 to the semi-closed position represented in Fig. 4 and indicated with the number 6 in Fig. 1 and then to the closed position represented in Figs. 5, 6 and 7 and indicated with the numbers 7, 8, 9, 10, 11 and 12 in Fig. 1 to then return again to the open position of Fig. 3. Correspondingly, in the position 12 of Fig. 1 the opening of the pincers 38 allows the positioning of the continuous sausage 33, introduced through the hole 31 of the protection case 30, between the pincers themselves (Fig. 3). Starting then from the semi-closed position of Fig. 4 and continuing through to the closed position of Fig. 5, the pincers 38 compress transversally the continuous sausage 33 for the formation of individual sausages 23 still joined together by means of short appendices 59 with a small diameter (Fig. 1). Subsequently, when the rear tang 44 of the knife 40 meets the inclined wall 47 of the shoulder 48 (Figs. 6 and 7), the shoulder itself acts as a cam for the knife 40, driving it forward to the shearing position of Fig. 7, wherein the knife 40 performs the shear of the appendix 59 that has just been formed and the consequent separation of the sausages 23. Before this, that is at a moment intermediate between the squeezing of the continuous sausage for the formation of the appendix 59 and the shearing off of the same appendix, the cam-type action performed by the helical grooves 53 has driven the toothed racks 51 interposed between the pairs of closed pincers to move forward from the rearward position of Fig. 8, corresponding to the position 5a of Fig. 1, to the forward position of Fig. 9, corresponding to the position 7a of Fig. 1, thus determining the engagement of the corresponding twisting rollers 55 and of the same toothed racks 51 with the sheaths 34 of the sausages that have already been formed, but are still joined together, so as to perform opposite torsions of the same that determine the twisting of the sheath at the terminal ends of the sausages for closing the same even after their separation due to the intervention of the shearing knife 40.

The individual sausages 23 finally drop on the conveyor belt 22, that conveys them toward the outlet from the machine, while the knife 40 returns to the at rest position, the toothed racks 51 move to the rear and the pincers 38 open again.

## Claims

1. A machine for the subdivision of a continuous sausage (33) formed by a flexible sheath (34) filled with product for sausages, comprising a rotating drum (29) endowed with a circumferential succession of squeezing members arranged along generators of the drum, wherein the squeezing members consist of pairs of pincers (38) urged in relative translation between an open position and a closed position for the formation of sausages (23) connected by narrow appendices (59), comprising a circumferential succession of pairs of twisting rollers (55) interpolated with said squeezing members (38) for engaging the sheaths (34) of the sausages (23) already formed **characterized in that** the twisting rollers (55) are operated so as to apply torsion in opposite direction to every successive sausage for corresponding twisting of the sheaths (34) at said appendices (59).

2. A machine according to claim 1, **characterized in that** said pairs of twisting rollers (55) are driven by respective toothed racks (51), that engage with said sheaths (34) of the sausages (23) and are made to move alternatively in opposite directions along respective generators of the drum (29) between successive squeezing members (38).

3. A machine according to claim 2, **characterized in that** the twisting rollers (55) of each pair are rotatably held by respective movable supports (56) held by respective supports (58) integral with respective slidable supports (37) of said pincers (38), said twisting rollers (55) meshing with respective toothed wheels (54) also slidably held by said movable supports (56) and in engagement with a respective toothed rack (51).

4. A machine according to claim 3, **characterized in that** with each sliding support (37) of said pincers (38) and with each toothed rack (51) there are made integral, a first and a second cam-type feeler pin (41, 52), respectively, engaged with respective first and second cam-type means (42, 53).

5. A machine according to claim 4, **characterized in that** said first and second cam-type means consist of first and second helical grooves (42, 53) obtained in the lateral wall of a fixed cylindrical case (43) with longitudinal axis coincident with the axis of rotation of the drum (29).

6. A machine according to claim 1, **characterized in that** it comprises shearing members (40) associated with said pincers (38) and operated, with pincers closed, to perform the shear of said appendices (59) for the reciprocal separation of the sausages (23) already formed.

## Patentansprüche

1. Vorrichtung zur Unterteilung eines kontinuierlichen Wurststrangs (33), welcher von einer flexiblen Haut (34) gebildet wird, welche mit Wurstmaterial gefüllt ist, welche eine drehbare Trommel (29) aufweist, welche in Umfangsrichtung mit einer Folge von Quetschelementen ausgestattet ist, welche längs den Erzeugenden der Trommel angeordnet sind, wobei die Quetschelemente ein Paar von Zangen (38) aufweisen, die unter Ausführung einer translatorischen Bewegung zwischen einer Offenstellung und einer Schließstellung zur Bildung der Einzelwürste (23) beaufschlagt sind, welche über schmale Fortsätze (59) verbunden sind, und die eine in Umfangsrichtung angeordnete Abfolge von Paaren von Verdrillungswalzen (55) aufweist, welche zwischen den Quetschelementen (38) angeordnet sind und mit den Hautteilen (34) der bereits gebildeten Einzelwürste (23) zusammenarbeiten, **dadurch gekennzeichnet, daß** die Verdrillungswalzen (55) derart betrieben sind, daß eine Verdrillung in Gegenrichtung von jeweils aufeinanderfolgenden Einzelwürsten aufgebracht wird, um die Hautteile (34) an den Fortsätzen (59) in entsprechender Weise zu verdrillen.

2. Vorrichtung nach Anspruch 1, **dadurch gekennzeichnet, daß** die Paare von Verdrillungswalzen (55) durch zugeordnete Zahnstangen (51) angetrieben sind, welche mit den Hautteilen (34) der Einzelwürste (23) zusammenarbeiten, und die derart ausgelegt sind, daß sie sich abwechselnd in Gegenrichtung und längs den zugeordneten Erzeugenden der Trommel (29) zwischen den aufeinanderfolgenden Quetschelementen (38) bewegen.

3. Vorrichtung nach Anspruch 2, **dadurch gekennzeichnet, daß** die Verdrillungswalzen (55) jedes Paars durch zugeordnete bewegliche Träger (56) drehbeweglich gelagert sind, welche mittels zugeordneten Haltern (58) gehalten sind, welche integral mit zugeordneten gleitbeweglichen Trägern (37) der Zangen (38) ausgebildet sind, und die Verdrillungswalzen (55) mit zugeordneten und mit Verzahnung versehenen Rädern (54) in Kämmeingriff sind, welche ebenfalls gleitbeweglich durch die beweglichen Träger (56) gehalten sind und mit einer zugeordneten Zahnstange (51) zusammenarbeiten.

4. Vorrichtung nach Anspruch 3, **dadurch gekennzeichnet, daß** einteilig mit jedem gleitbeweglichen Träger (37) der Zange (38) und mit jeder Zahnstange (51) ein erster und ein zweiter Fühlerstift (41, 52) jeweils ausgebildet ist, welcher von der Nockenbauart ist und der mit zugeordneten ersten und zweiten Nockeneinrichtungen (42, 53) zusammenarbeitet.

5. Vorrichtung nach Anspruch 4, **dadurch gekennzeichnet, daß** die ersten und die zweiten Nockeneinrichtungen eine erste und eine zweite spiralförmig verlaufende Ausnehmung (42, 53) aufweisen, welche in der Querwand eines festen zylindrischen Gehäuses (43) ausgebildet sind, dessen Längsachse mit der Drehachse der Trommel (29) zusammenfällt.

6. Vorrichtung nach Anspruch 1, **dadurch gekennzeichnet, daß** sie Schneidelemente (40) aufweist, die den Zangen (38) zugeordnet sind, und die bei geschlossenen Zangen betreibbar sind, um die Fortsätze (59) zur wechselseitigen Trennung der jeweils gebildeten Einzelwürste (23) durchzuschneiden.

## Revendications

1. Machine destinée à subdiviser une saucisse continue (33) formée avec une gaine souple (34) remplie d'un produit à saucisse, comprenant un tambour rotatif (29) muni d'une succession circonférentielle d'organes de serrage placés le long de génératrices du tambour, les organes de serrage étant formés de paires de pinces (38) déplacées en translation relative entre une position d'ouverture et une position de fermeture pour la formation de saucisses (23) raccordées par d'étroits appendices (59), comprenant une succession circonférentielle de paires de rouleaux (55) de retordage imbriqués avec les organes de serrage (38) afin qu'ils coopèrent avec les gaines (34) des saucisses (23) déjà formées, **caractérisée en ce que** les rouleaux de retordage (55) sont manoeuvres afin qu'ils appliquent une torsion de sens opposé à chaque saucisse successive par rapport à la torsion correspondante des gaines (34) des appendices (59).

2. Machine selon la revendication 1, **caractérisée en ce que** les paires de rouleaux de retordage (55) sont entraînés par des crémaillères respectives (51) qui coopèrent avec les gaines (34) des saucisses (23) et se déplacent alternativement en sens opposés le long de génératrices respectives du tambour (29) entre les organes successifs de serrage (38).

3. Machine selon la revendication 2, **caractérisée en ce que** les rouleaux de retordage (55) de chaque paire sont maintenus en rotation par des supports respectifs mobiles (56) retenus par des supports respectifs (58) solidaires de supports coulissants respectifs (37) des pinces (38), les rouleaux de retordage (55) étant en prise avec des roues dentées respectives (54) qui sont aussi retenues de manière coulissante par des supports mobiles (56) et en coopération avec une crémaillère respective (51).

4. Machine selon la revendication 3, **caractérisée en ce qu'**une première et une seconde broche (41, 52) formant palpeur du type à came, coopérant respectivement avec un premier et un second dispositif respectif du type à came (42, 53), sont solidaires de chaque support coulissant (37) des pinces (38) et de chaque crémaillère (51) respectivement.

5. Machine selon la revendication 4, **caractérisée en ce que** le premier et le second dispositif du type à came est constitué d'une première et d'une seconde gorge hélicoïdale (42, 53) formées dans la paroi latérale d'un carter cylindrique fixe (43) d'axe longitudinal coïncidant avec l'axe de rotation du tambour (29).

6. Machine selon la revendication 1, **caractérisée en ce qu'**elle comporte des organes de cisaillement (40) associés aux pinces (38) et manoeuvrés, lorsque les pinces sont fermées, pour assurer le cisaillement des appendices (59) et assurer la séparation des saucisses (29) déjà formées.
